# EUROPÄISCHE PATENTSCHRIFT

(11) **EP 3 108 203 B1**
(45) Veröffentlichungstag und Bekanntmachung des Hinweises auf die Patenterteilung: **14.02.2018**
(21) Anmeldenummer: 15741811.2
(22) Anmeldetag: 25.03.2015
(51) Int. Cl.: G01B 11/25

(54) **VEFAHREN UND VORRICHTUNG ZUR TIEFENBESTIMMUNG EINER OBERFLÄCHE EINES PRÜFOBJEKTES**
METHOD AND APPARATUS FOR MEASURING DEPTH OF A SURFACE OF A TEST OBJECT
MÉTHODE ET DISPOSITIF DE DÉTERMINATION DE LA PROFONDEUR D'UNE SURFACE D'UN OBJET À CONTRÔLER

(30) Priorität: 11.04.2014 DE 102014207022
(43) Veröffentlichungstag der Anmeldung: 28.12.2016
(73) Patentinhaber: Siemens Aktiengesellschaft, 80333 München (DE)
(72) Erfinder: SCHICK, Anton, 84149 Velden (DE); RENTSCHLER, Peter, 75382 Neuhengstett (DE)
(86) Internationale Anmeldenummer: PCT/EP2015/056322
(87) Internationale Veröffentlichungsnummer: WO 2015/155000

(56) Entgegenhaltungen:
- DE-A1-102008 002 730
- US-A- 5 986 745
- US-A1- 2005 200 857
- FU YUANYUAN, LIU GUOZHONG: "Research on Color Encoding Structured Light 3D Measurement Technology", SPIE, PO BOX 10 BELLINGHAM WA 98227-0010 USA, Bd. 6834, Nr. 683437, 29. November 2007 (2007-11-29), Seiten 1-8, XP040250079, DOI: 10.1117/12.757128

## Beschreibung

Die Erfindung betrifft ein Verfahren zur Tiefenbestimmung einer Oberfläche eines Prüfobjektes mittels einer farbcodierten Triangulation.

Der Stand der Technik unterscheidet aktive und passive Triangulationsverfahren zur Tiefenbestimmung. Im Gegensatz zu passiven Triangulationsverfahren weisen aktive eine strukturierte Objektbeleuchtung auf, wobei die geometrischen Eigenschaften der Objektbeleuchtung bekannt sind. Passive Verfahren verwenden typischerweise diffuses Tages- oder Scheinwerferlicht als Objektbeleuchtung, wobei wenigstens zwei Kamerasysteme aus verschiedenen Blickrichtungen jeweils ein Abbild des Prüfobjektes erfassen. Entscheidend ist, dass in den wenigstens zwei erfassten Abbildern korrespondierende Bildpunkte erkannt werden. Zwei Bildpunkte sind zueinander korrespondierend, falls diese denselben Punkt auf der Oberfläche des Prüfobjektes kennzeichnen. Die Identifikation korrespondierender Bildpunkte wird als Korrespondenzproblem bezeichnet.

In aktiven Triangulationsverfahren ist das Korrespondenzproblem entschärft. Bei aktiven Triangulationsverfahren wird ein Muster auf die Oberfläche des Prüfobjektes aus einer vorgegebenen und vorbekannten Raumrichtung projiziert und aus einer hiervon verschiedenen Raumrichtung erfasst. Durch die gekrümmte Oberfläche des Prüfobjektes wird das erfasste Muster verzehrt oder verformt. Aus der Verzerrung oder Verformung des Musters kann durch entsprechende Algorithmen die dreidimensionale Struktur des Prüfobjektes rekonstruiert werden (Tiefenbestimmung).

Zur Tiefenbestimmung ist es erforderlich, dass markante Merkmale im projizierten Muster im erfassten, verformten oder verzerrten Muster eindeutig erkannt werden. Liegt die genannte Eindeutigkeit nicht oder nur ungenügend vor, so entstehen Fehlstellen in der rekonstruierten dreidimensionalen Struktur des Prüfobjektes.

Zur Verbesserung schlägt der Stand der Technik codierte oder farbcodierte Triangulationsverfahren vor. Ein Nachteil der bevorzugten farbcodierten Triangulationsverfahren ist, dass durch Absorption Farbunterschiede zwischen dem projizierten und erfassten Muster vorliegen, die wiederum zu Fehlstellen und folglich zu einem Korrespondenzproblem führen. Durch entsprechend angepasste Algorithmen bei der Auswertung des erfassten Musters wird versucht mittels Glättungsalgorithmen die genannten Fehlstellen zu interpolieren und/oder zu reparieren. Dies gelingt nach dem Stand der Technik nur unzureichend.

Insbesondere bei Oberflächen, welche Farben stark unterschiedlich absorbieren, wie beispielsweise organischem Gewebe, stehen typischerweise nur eine geringe Anzahl von Bildpunkten des erfassten Musters zur Verfügung, so dass sich das Korrespondenzproblem bei Anwendungen der farbcodierten Triangulation in der Chirurgie verschärft.

DE 10 2008 002 730 A1 offenbart eine Vorrichtung zur Tiefenbestimmung einer Oberfläche eines Prüfobjektes mit einer Projektionsvorrichtung zur Projektion eines farbigen Streifenmusters, einer Erfassungsvorrichtung zur Erfassung des von der Oberfläche des Prüfobjektes reflektierten Streifenmusters und einer Auswertvorrichtung zur Tiefenbestimmung der Oberfläche des Prüfobjektes mittels einer Abfolge von farbigen Streifen des reflektierten Streifenmusters. Der vorliegenden Erfindung liegt folglich die Aufgabe zugrunde ein farbcodiertes Triangulationsverfahren zu verbessern.

Die Aufgabe wird durch ein Verfahren mit den Merkmalen des unabhängigen Anspruches 1 und durch eine Vorrichtung mit den Merkmalen des unabhängigen Anspruches 15 gelöst. In den abhängigen Ansprüchen sind vorteilhafte Ausgestaltungen und Weiterbildungen der Erfindung angegeben.

Erfindungsgemäß wird ein Verfahren zur Tiefenbestimmung einer Oberfläche eines Prüfobjektes vorgeschlagen, bei dem ein aus einer Abfolge von farbigen Streifen gebildetes farbiges Streifenmuster auf eine Oberfläche des Prüfobjektes projiziert wird, bei dem ein von der Oberfläche des Prüfobjektes reflektiertes Streifenmuster erfasst und mittels einer Auswertvorrichtung ausgewertet wird, wobei das farbige Streifenmuster und die Auswertvorrichtung derart ausgestaltet sind, dass die Tiefenbestimmung der Oberfläche des Prüfobjektes mittels der Abfolge von farbigen Streifen des reflektierten Streifenmusters und mittels einer Abfolge von Breiten der Streifen des reflektierten Streifenmusters erfolgt.

Erfindungsgemäß erfolgt die Tiefenbestimmung der Oberfläche des Prüfobjektes mittels der Abfolge der farbigen Streifen des reflektierten Streifenmusters und mittels der Abfolge der Breiten des reflektierten Streifenmusters. Mit anderen Worten bildet die Abfolge der farbigen Streifen einen Farbcode und die Abfolge der Breiten der Streifen des reflektierten Streifmusters einen Breitencode aus. Hierbei ist die Auswertvorrichtung zu einer Auswertung des Farbcodes und Breitencodes ausgebildet.

Der vorliegende Breitencode ermöglicht vorteilhafterweise eine Verbesserung des Korrespondenzproblems. Das Korrespondenzproblem bezeichnet das Problem, dass ein Bildpunkt des projizierten farbigen Streifenmusters und ein Bildpunkt des erfassten reflektierten Streifenmusters zur Herstellung einer Dreiecksbeziehung, die der Triangulation zugrunde liegt, als derselbe Bildpunkt erkennbar sein müssen.

Erfindungsgemäß umfasst das projizierte farbige Streifenmuster zur Lösung oder Verbesserung des Korrespondenzproblems wenigstens zwei Codes, einen Farb- und Breitencode. Hierdurch wird die Erkennbarkeit korrespondierender Bildpunkte verbessert. Vorteilhafterweise wird durch die hierdurch erreichte Verbesserung des Korrespondenzproblems die Anzahl von Fehlstellen im erfassten und ausgewerteten reflektierten Streifenmuster verringert, so dass die Tiefenbestimmung der Oberfläche des Prüfobjektes verbessert wird.

Die erfindungsgemäße Vorrichtung zur Tiefenbestimmung einer Oberfläche eines Prüfungsobjektes umfasst eine Projektionsvorrichtung, die zur Projektion eines farbigen Streifenmusters auf eine Oberfläche des Prüfobjektes ausgebildet ist, eine Erfassungsvorrichtung, die zur Erfassung eines von der Oberfläche des Prüfobjektes reflektierten Streifenmusters vorgesehen ist, und eine Auswertvorrichtung, die zur Tiefenbestimmung der Oberfläche des Prüfobjektes mittels einer Abfolge von farbigen Streifen des reflektierten Streifenmusters und mittels einer Abfolge von Breiten der Streifen des reflektierten Streifenmusters ausgebildet ist.

Erfindungsgemäß ist die Auswertvorrichtung zur Auswertung eines Farbcodes - Abfolge der farbigen Streifen des reflektierten Streifenmusters - und eines Breitencodes - Abfolge der Breiten der Streifen des reflektierten Streifenmusters - ausgebildet. Es ergeben sich zum bereits genannten erfindungsgemäßen Verfahren gleichartige und gleichwertige Vorteile.

Gemäß einer vorteilhaften Ausgestaltung der Erfindung wird ein farbiges Streifenmuster verwendet, das aus den Grundfarben Rot, Grün und Blau und/oder deren Mischfarben und/oder Schwarz gebildet wird.

Vorteilhafterweise stehen dadurch für die farbcodierte Triangulation acht Farben, Rot, Grün, Blau, Gelb, Magenta, Cyan, Schwarz und Weiß zur Verfügung. Durch die vorteilhafte Verwendung von acht Farben wird das Korrespondenzproblem weiter abgeschwächt und somit die Tiefenbestimmung verbessert. Hierbei ergibt sich Gelb mittels Mischung der Farben Rot und Grün, Magenta mittels Mischung der Farben Blau und Rot, Cyan mittels Mischung der Farben Blau und Grün und Weiß mittels Mischung der Farben Rot, Grün und Blau. Das Nichtvorhandensein einer Farbe wird als Farbe Schwarz bezeichnet. Als Mischung der Farben ist folglich die additive Farbmischung der Grundfarben Rot, Grün und Blau zu verstehen.

Durch die vorteilhafte Verwendung von wenigstens acht Farben wird eine farbcodierte Triangulation bereitgestellt, die einen einfachen Aufbau besitzt und die die Tiefenbestimmung bei einem zudem bewegten Prüfobjekt ermöglicht. Insbesondere bei einer Anwendung in der minimalinvasiven Chirurgie ist eine solche, auf den genannten acht Farben basierende farbcodierte Triangulation, von Vorteil.

Gemäß einer vorteilhaften Ausgestaltung der Erfindung wird das farbige Streifenmuster derart gebildet, dass sich bei einer Auslöschung wenigstens einer Grundfarbe die Abfolge der Breiten der Streifen des reflektierten Streifenmusters ergibt.

Mit der Auslöschung wenigstens einer Grundfarbe ist hierbei ein Entfall der Grundfarbe aus dem farbigen Streifenmuster zu verstehen. Beispielsweise kann der Entfall der Grundfarbe aus Farbfehlern, die durch die Reflexion an der Oberfläche des Prüfobjektes entstehen, erfolgen. Besteht die Farbe eines Streifens des farbigen Streifenmusters aus der Grundfarbe, die entfällt, so geht dieser Streifen durch den Entfall der Grundfarbe in die Farbe Schwarz über. Ist die Farbe des Streifens eine Mischfarbe, so geht die Farbe des Streifens beim Entfall einer Grundfarbe in eine Grundfarbe oder in eine Mischfarbe, gebildet aus den nicht entfallenden Grundfarben, über. Beispielsweise wird aus der Farbe Magenta durch Entfall der Grundfarbe Blau die Farbe Rot oder aus der Farbe Gelb durch Entfall der Grundfarbe Grün die Farbe Rot, während aus dem Entfall der Grundfarben Blau und Grün aus der Farbe Cyan folglich Schwarz resultiert.

Durch die Auslöschung der wenigstens einen Grundfarbe aus dem Farbcode des projizierten farbigen Streifenmusters und/oder des erfassten reflektierten Streifenmusters wird vorteilhafterweise ein Breitencode gebildet. Entfallen zwei von drei Grundfarben, so ergibt sich ein monochromatischer Breitencode, der beispielsweise nur verschieden breite rote und schwarze Streifen umfasst.

Mittels der Auswertvorrichtung, die zur Auswertung des Breitencodes vorgesehen ist, wird erfindungsgemäß der Breitencode, der sich durch Auslöschung der wenigstens einen Grundfarbe aus der Abfolge der Streifen des reflektierten Streifenmusters ergibt, zur Tiefenbestimmung herangezogen.

In einer bevorzugten Ausgestaltung der Erfindung wird aus einer vorbekannten Abfolge der Breiten des reflektierten Streifenmusters die Abfolge der farbigen Streifen des farbigen Streifenmusters derart abgeleitet, dass sich bei Auslöschung wenigstens einer Grundfarbe aus dem farbigen Streifenmuster die vorbekannte Abfolge der Breiten der Streifen ergibt.

Mit anderen Worten wird vorerst der Breitencode festgelegt. Hierbei kann der Breitencode zufällig erzeugt werden. Aus dem vorbekannten und festgelegten Breitencode wird anschließend ein Farbcode bestimmt, wobei sich durch Auslöschung wenigstens einer Grundfarbe des Farbcodes der vorbekannte Breitencode ergibt. Eine Abstimmung der Auswertvorrichtung auf den Breiten- und/oder Farbcode kann mittels einer Kalibrierung erfolgen.

In einer besonders bevorzugten Ausgestaltung der Erfindung erfolgt die Auslöschung der wenigstens einen Grundfarbe im reflektierten Streifenmuster durch eine Absorption der Grundfarbe.

Mit anderen Worten wird die wenigstens eine Grundfarbe, insbesondere wenigstens zwei Grundfarben, durch das Prüfobjekt absorbiert. Beispielsweise absorbiert Blut die Grundfarben Grün und Blau. Durch die Absorption der Grundfarben Grün und Blau gehen diese im reflektierten Streifenmuster in Schwarz über. Es gehen folglich durch Absorption der Grundfarben Blau und Grün alle Farben (Grundfarben und Mischfarben), die ohne die Farbe Rot gebildet sind, in die Farbe Schwarz über, während alle Farben, die die Grundfarbe Rot enthalten zur Farbe Rot werden. Dadurch ergibt sich eine Abfolge von roten und schwarzen Streifen mit verschiedenen Breiten, die den Breitencode zur Tiefenbestimmung bilden.

Gemäß einer vorteilhaften Ausgestaltung der Erfindung wird die Tiefenbestimmung aus einem ersten und zweiten Teilbereich des erfassten reflektierten Streifenmusters ermittelt, wobei im ersten Teilbereich die Tiefenbestimmung mittels der Abfolge der farbigen Streifen und im zweiten Teilbereich mittels der Abfolge von Breiten der Streifen des reflektierten Streifmusters erfolgt.

Mit anderen Worten wird im ersten Teilbereich die Tiefenbestimmung mittels des Farbcodes und im zweiten Teilbereich mittels des Breitencodes ermittelt. Das ist deshalb von Vorteil, da beispielsweise in stark absorbierenden Teilbereichen, die den zweiten Teilbereich des Prüfobjektes ausbilden, mittels des Breitencodes eine Tiefenbestimmung der stark absorbierenden Teilbereiche (zweiter Teilbereich) ermöglicht wird. Hierbei ist ein stark absorbierender Teilbereich als ein Teilbereich der Oberfläche des Prüfobjektes anzusehen, der eine derartige Absorption aufweist, dass eine Ermittlung oder Bestimmung der Farben der im Teilbereich vorliegenden Streifen nicht oder unschwer möglich ist.

Generell ist es von Vorteil die Tiefenbestimmung mittels des Farbcodes durchzuführen, da die farbcodierte Triangulation - im Vergleich zur Tiefenbestimmung mittels Breitencode - eine höhere Auflösung ermöglicht. Liegt jedoch der genannte Farbcode im zweiten Teilbereich, beispielsweise durch eine Absorption von Grundfarben des Farbcodes, nur ungenügend vor, so kann vorteilhafterweise eine, wenn auch mit geringerer Auflösung vorliegende Tiefenbestimmung im zweiten Teilbereich durch den Breitencode erfolgen. Mit anderen Worten wird im zweiten Teilbereich des Prüfobjektes der verwendete Code vom Farbcode auf den Breitencode umgeschaltet, wobei der Breitencode verborgen im Farbcode des projizierten farbigen Streifenmusters liegt.

Die Verwendung des Breitencodes im zweiten Teilbereich kann durch einen Schwellwert bestimmt werden.

Beispielsweise bestimmt sich die Verwendung des Breitcodes aus einem Rauschschwellwert. Liegt ein Rauschen und folglich ein Fehler bei der Erkennung der einzelnen Farben des reflektierten Streifenmusters im zweiten Teilbereich über den genannten Rauschschwellwert, so erfolgt die Tiefenbestimmung im zweiten Teilbereich mittels des Breitencodes. In den übrigen Teilbereichen (erster Teilbereich) der Oberfläche des Prüfobjektes erfolgt die Tiefenbestimmung mittels des Farbcodes, da das Rauschen im genannten ersten Teilbereich unterhalb des Rauschschwellwertes liegt. Hierbei erfasst und erkennt die Auswertvorrichtung den Rauschschwellwert und schaltet automatisiert zwischen Breitencode und Farbcode um. Die Fehlstellen, die durch das Rauschen im zweiten Teilbereich vorliegen würden, können folglich durch die Verwendung des Breitencodes, der verborgen im Farbcode liegt, vermieden werden. Dadurch wird die Tiefenbestimmung der Oberfläche des Prüfobjektes verbessert.

In einer bevorzugten Ausgestaltung der Erfindung wird ein Weißlicht auf die Oberfläche des Prüfobjektes projiziert und ein vom Prüfobjekt reflektiertes Abbild des Weißlichtes erfasst, wobei die Bestimmung des Schwellwertes mittels eines Vergleichs des reflektierten Abbildes des Weißlichtes und des reflektierten Streifenmusters erfolgt.

Mit anderen Worten wird mittels des reflektierten Abbildes des Weißlichtes ein Farbabgleich ermöglicht. Hierbei kann für jeden Teilbereich der Oberfläche des Prüfobjektes durch Bildung eines Schwellwertes oder eines Verhältnisses - in Bezug auf das projizierte farbige Streifenmuster - für die Farben des reflektierten Streifenmusters entschieden werden, ob der Farbcode und/oder der Breitencode für die Tiefenbestimmung in dem betrachteten Teilbereich verwendet wird. Bevorzugt wird das reflektierte Streifmuster mittels einer Drei-Chip-Kamera erfasst.

Vorteilhafterweise werden mittels der Drei-Chip-Kamera die Grundfarben Rot, Grün und Blau des reflektierten Streifenmusters einzeln erfasst. Eine parallele, insbesondere zeitgleiche Auswertung der Grundfarben ist vorgesehen.

Besonders bevorzugt ist es, die Abfolge der Breiten der Streifen des reflektierten Streifenmusters (Breitencode) aus einem Signal eines einzelnen Chips der Drei-Chip-Kamera zu gewinnen.

Vorteilhafterweise wird hierdurch eine zeitgleiche und parallele Auswertung und Erfassung des Farbcodes und des Breitencodes ermöglicht.

Wird der Breitencode mittels einer Grundfarbe, beispielsweise Rot, und der Farbe Schwarz gebildet, so wird der Breitencode aus dem Signal des Chips, der zur Erfassung der Farbe Rot vorgesehen ist, ermittelt. Als Farbe Schwarz wird hierbei ein Fehlen der Farbe Rot bezeichnet, wobei das Fehlen der Farbe Rot wiederum durch einen Schwellwert festgelegt sein kann.

Gemäß einer vorteilhaften Ausgestaltung der Erfindung wird das farbige Streifenmuster mittels eines Dias erzeugt.

Mit anderen Worten ist die Projektionsvorrichtung als Diaprojektor ausgebildet. Weitere Projektionsvorrichtungen, beispielsweise Projektoren, die ein diffraktives optisches Element (abgekürzt DOE) umfassen, können vorgesehen sein (DOE-Projektoren).

Gemäß einer bevorzugten Ausgestaltung der Erfindung wird die Abfolge der farbigen Streifen des farbigen Streifenmusters zufällig generiert.

Eine zufällige Generation der Abfolge der Streifen des farbigen Streifenmusters ist eine einfache und ressourcensparende Generation des Farbcodes. Hierbei ist sicherzustellen, dass der zufällig generierte Farbcode nach dessen Generation auf Mehrdeutigkeiten geprüft wird. Liegen solche Mehrdeutigkeiten vor, so kann beispielsweise eine erneute zufällige Generation des Farbcodes erfolgen. Dies wird solange fortgeführt, bis ein Farbcode ohne Mehrdeutigkeiten vorliegt. Hierbei wird auch der Breitencode zufällig generiert, so dass auch eine Prüfung des Breitencodes auf Mehrdeutigkeiten erfolgt.

Gemäß einer Ausgestaltung der Erfindung ist das Prüfobjekt von einer komplexen Flüssigkeit, insbesondere von Blut umgeben.

Blut absorbiert annähernd vollständig die Grundfarben Grün und Blau des projizierten farbigen Streifenmusters. Mit anderen Worten wird Licht mit einer Wellenlänge unterhalb von 600 nm annähernd vollständig durch Blut absorbiert. Dadurch ist die vorliegende Erfindung für Prüfobjekte, die von Blut umgeben sind, beispielsweise organisches Gewebe, besonders bevorzugt. Insbesondere in der minimalinvasiven Chirurgie ist folglich die vorliegende Erfindung von Vorteil.

Weitere Vorteile, Merkmale und Einzelheiten der Erfindung ergeben sich aus dem im Folgenden beschriebenen Ausführungsbeispielen sowie anhand der Zeichnungen. Dabei zeigen:
- Figur 1: eine Abfolge von farbigen Streifen, die drei Farben umfasst, und einen aus der Abfolge der farbigen Streifen entstehende Abfolge von Breiten von Streifen;
- Figur 2: eine Abfolge von farbigen Streifen, die acht Farben umfasst, und einen aus der Abfolge der farbigen Streifen entstehende Abfolge von Breiten von Streifen;
- Figur 3: einen ersten und zweiten Teilbereich eines Prüfobjektes; und
- Figur 4: ein schematisches Flussdiagramm des Verfahrens zur Tiefenbestimmung einer Oberfläche eines Prüfobjektes.

Gleichartige Elemente können in den Figuren mit denselben Bezugszeichen versehen sein. Generell sind in den Figuren die Farben als eine Schraffur dargestellt, wobei jeweils eine Schraffur eine Farbe repräsentiert.

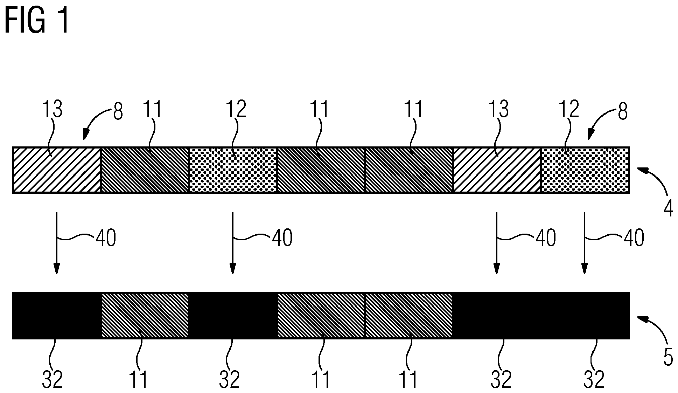

Figur 1 zeigt eine Abfolge von farbigen Streifen 8, die einen Farbcode 4 ausbildet. Hierbei ist der Farbcode 4 mittels drei Grundfarben Rot 11, Grün 12 und Blau 13 gebildet. Durch eine Auslöschung 40 der Grundfarben Grün 12 und Blau 13, beispielsweise durch Absorption, geht der Farbcode 4 in eine Abfolge von Breiten von Streifen über, die einen Breitencode 5 bilden. Der Breitencode 5 umfasst hierbei die Farben Rot 11 und Schwarz 32, wobei Schwarz 32 die Abwesenheit einer Farbe kennzeichnet. Die Abwesenheit einer Farbe erfolgt beispielsweise durch die Auslöschung 40 oder Absorption der Farbe. Eine nicht dargestellte Auswertvorrichtung ist zur Auswertung des Farbcodes 4 und des Breitencodes 5 ausgebildet.

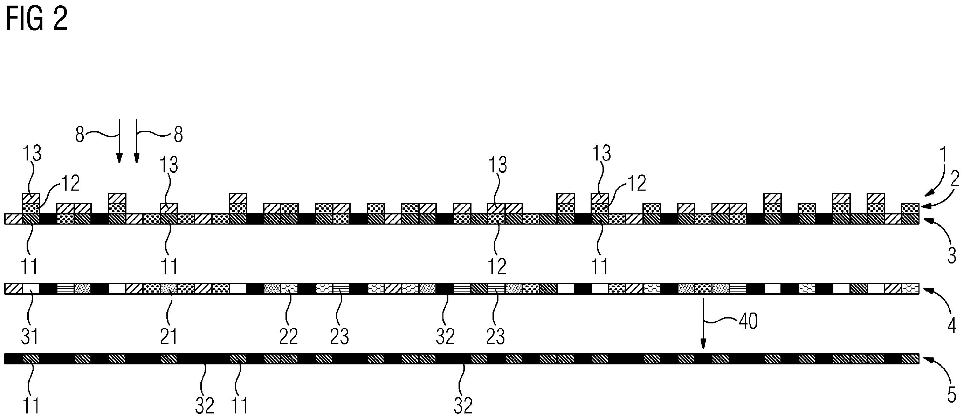

In Figur 2 ist eine Entstehung einer Abfolge von Breiten von Streifen - Breitencode 5 - aus einer Abfolge von farbigen Streifen 8 - Farbcode 4 - dargestellt. Hierbei wird eine Farbe eines Streifens 8 des Farbcodes 4 aus drei Grundfarben 1, 2, 3 gebildet. Als Grundfarben 1, 2, 3 werden Farben Rot 11, Grün 12 und Blau 13 verwendet. Hieraus ergeben sich die Mischfarben Gelb 22, Magenta 21, Cyan 23 und Weiß 31. Die Farbe Schwarz 32 kennzeichnet die Abwesenheit oder das Nichtvorliegen einer Farbe. Gelb 22 ergibt sich mittels additiver Farbmischung von Rot 11 und Grün 12, Magenta 21 mittels additiver Farbmischung von Rot 11 und Blau 13 und Cyan 23 mittels additiver Farbmischung von Grün 12 und Blau 13.

Durch eine Auslöschung 40 bzw. einen Entfall 40 der Grundfarben Grün 12 und Blau 13 entsteht aus dem Farbcode 4 der Breitencode 5. Der Breitencode 5 umfasst folglich die zwei Farben Rot 11 und Schwarz 32, so dass ein monochromatischer Breitencode 5 vorliegt. Die Auslöschung 40 der Grundfarben Grün 12 und Blau 13 erfolgt durch eine Absorption 40, beispielsweise an nicht dargestelltem Blut. Mit anderen Worten geht der Farbcode 4 durch Absorption der Grundfarben Grün 12 und Blau 13 in den Breitencode 5 über, der von einer nicht dargestellten Auswertvorrichtung auswertbar ist.

Im optischen ist die Farbe Rot 11 durch einen dominierenden Spektralbereich oberhalb von 600 nm, die Farbe Grün 12 durch einen dominierenden Spektralbereich von 520 nm bis 565 nm und die Farbe Blau 13 durch einen dominierenden Spektralbereich von 460 nm bis 480 nm gekennzeichnet. Die Mischfarben Gelb 22, Magenta 21, Cyan 23 und Weiß 31 entstehen durch eine additive Farbmischung der Grundfarben Rot 11, Grün 12 und Blau 13.

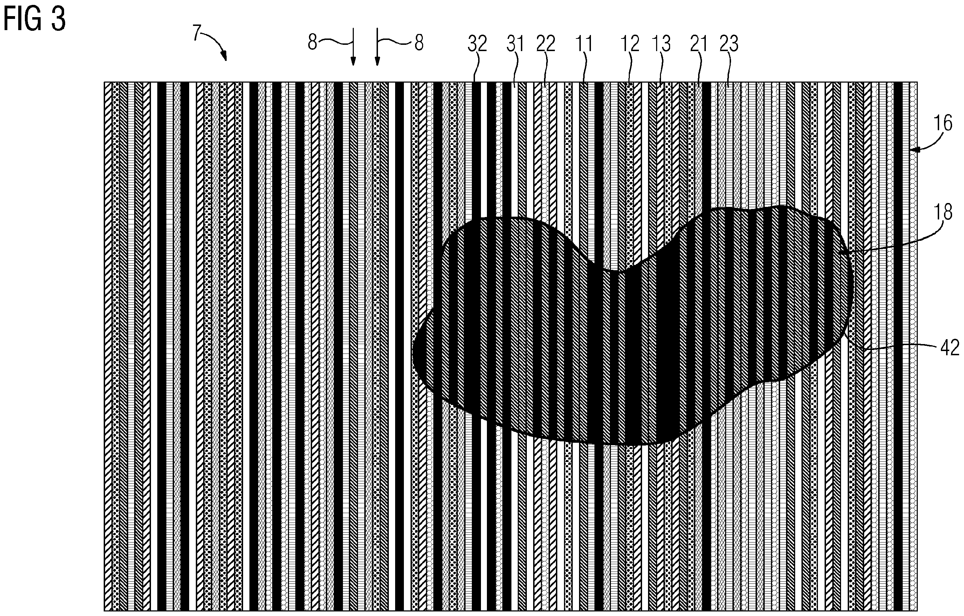

In Figur 3 ist ein erster und zweiter Teilbereich 16, 18 einer Oberfläche eines Prüfobjektes dargestellt, wobei die Oberfläche wenigstens einen Teil der Gesamtoberfläche des Prüfobjektes umfasst. Hierbei wird ein farbiges Streifenmuster auf die Oberfläche des Prüfobjektes projiziert und ein reflektiertes Streifenmuster 7 erfasst. Die Streifen 8 des reflektierten Streifenmusters 7 weisen jeweils eine der acht Farben Rot 11, Grün 12, Blau 13, Magenta 21, Gelb 22, Cyan 23, Weiß 31 oder Schwarz 32 auf.

Der zweite Teilbereich 18 der Oberfläche des Prüfobjektes ist mit Blut 42 bedeckt. Hierdurch weist der zweite Teilbereich 18 eine annähernd vollständige Absorption 40 der Grundfarben Grün 12 und Blau 13 auf.

Aus Figur 3 ist zu erkennen, dass durch die Absorption 40 die Farben Grün 12, Blau 13 und Cyan 23 in die Farbe Schwarz 32 übergehen. Die Farben Magenta 21, Gelb 22 und Weiß 31 gehen in Rot 11 über. Rote Streifen behalten nach der Reflexion im Wesentlichen die Farbe Rot 11.

Durch die absorptionsbedingte Auslöschung 40 der Farben Grün 12, Blau 13 und Cyan 23 im zweiten Teilbereich 18 wird ein Breitencode 5 ausgebildet, der zur Tiefenbestimmung der Oberfläche des Prüfobjektes im zweiten Teilbereich 18 herangezogen wird. Außerhalb des stark absorbierenden zweiten Teilbereiches 18, das heißt im ersten Teilbereich 16, wobei der erste Teilbereich 16 nur schwach absorbierend ist, erfolgt die Tiefenbestimmung der Oberfläche des Prüfobjektes mittels des Farbcodes 4. Dadurch werden Fehlstellen im Farbcode 4, die durch den zweiten Teilbereich 18 entstehen, durch eine Auswertung des Breitencodes 5 im zweiten Teilbereich 18 geschlossen, so dass eine annähernd lückenlose und eindeutige Tiefenbestimmung der Oberfläche des Prüfobjektes ermöglicht wird.

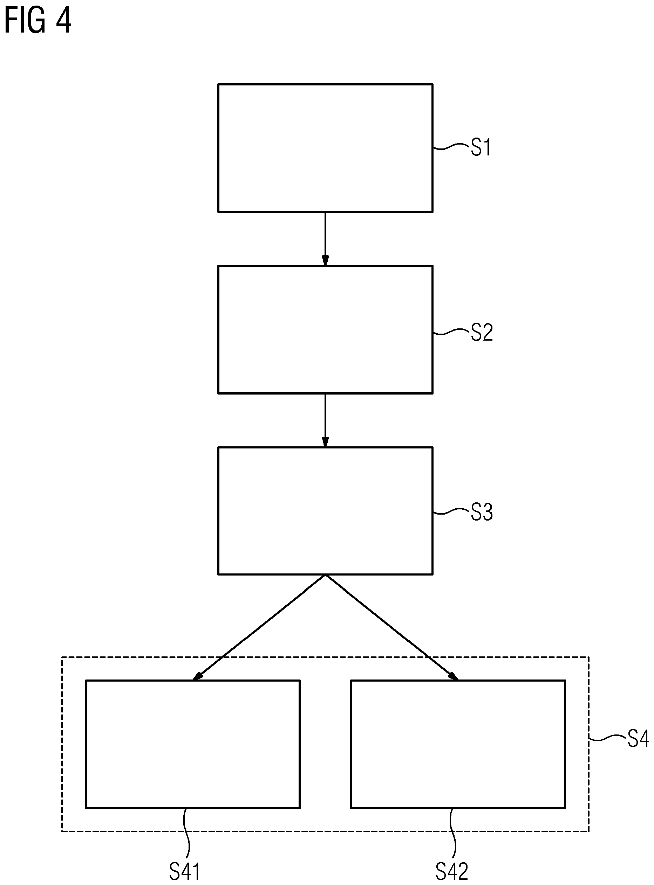

In Figur 4 ist ein schematisches Flussdiagramm des Verfahrens zur Tiefenbestimmung einer Oberfläche eines Prüfobjektes abgebildet.

In einem ersten Schritt S1 wird ein farbiges Streifenmuster aus Abfolge von farbigen Streifen gebildet. Hierbei kann die Abfolge der farbigen Streifen des farbigen Streifenmusters zufällig generiert werden.

In einem zweiten Schritt S2 wird das gebildete farbige Streifenmuster mittels einer Projektionsvorrichtung auf die Oberfläche des Prüfobjektes projiziert. Insbesondere ist als Prüfobjekt organisches Gewebe, das von Blut umgeben ist, vorgesehen.

In einem dritten Schritt S3 wird ein von der Oberfläche des Prüfobjekts reflektiertes Streifenmuster erfasst. Beispielsweise erfolgt die Erfassung mittels einer Kamera, insbesondere mittels einer Drei-Chip-Kamera.

In einem vierten Schritt S4 erfolgt die Tiefenbestimmung mittels einer Auswertvorrichtung, wobei die Tiefenbestimmung mittels einer Auswertung eines Farbcodes S41 und mittels einer Auswertung eines Breitencodes S42 erfolgt.

Vorteilhafterweise wird dadurch ein farbcodiertes Triangulationsverfahren ermöglicht, das einen Farb- und Breitencode synergetisch kombiniert, wodurch die Tiefenbestimmung der Oberfläche des Prüfobjektes bei absorbierenden Prüfobjekten verbessert wird. Insbesondere in der minimalinvasiven Chirurgie, beispielsweise bei einer Verwendung in Endoskopen, ist die beschriebene Erfindung von Vorteil.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Verfahren zur Tiefenbestimmung einer Oberfläche eines Prüfobjektes, bei dem ein aus einer Abfolge von farbigen Streifen (4) gebildetes farbiges Streifenmuster auf eine Oberfläche des Prüfobjektes projiziert wird, bei dem ein von der Oberfläche des Prüfobjektes reflektiertes Streifenmuster (7) erfasst und mittels einer Auswertvorrichtung ausgewertet wird, wobei das farbige Streifenmuster und die Auswertvorrichtung derart ausgestaltet sind, dass die Tiefenbestimmung der Oberfläche des Prüfobjektes mittels der Abfolge von farbigen Streifen (4) des reflektierten Streifenmusters (7) und mittels einer Abfolge von Breiten der Streifen (5) des reflektierten Streifenmusters (7) erfolgt.

2. Verfahren gemäß Anspruch 1, bei dem ein farbiges Streifenmuster verwendet wird, das aus den Grundfarben Rot (11), Grün (12) und Blau (13) und/oder deren Mischfarben (21, 22, 23, 31) und/oder Schwarz (32) gebildet wird.

3. Verfahren gemäß Anspruch 2, bei dem das farbige Streifenmuster derart gebildet wird, dass sich bei einer Auslöschung (40) wenigstens einer Grundfarbe (12, 13) die Abfolge der Breiten (5) der Streifen des reflektierten Streifenmusters (7) ergibt.

4. Verfahren gemäß Anspruch 3, bei dem aus einer vorbekannten Abfolge der Breiten der Streifen (5) des reflektierten Streifenmusters (7) die Abfolge der farbigen Streifen (4) des farbigen Streifenmusters derart abgeleitet wird, dass sich bei Auslöschung (40) wenigstens einer Grundfarbe (12, 13) aus dem farbigen Streifenmuster die vorbekannte Abfolge der Breiten (5) der Streifen ergibt.

5. Verfahren gemäß Anspruch 3 oder 4, bei dem die Auslöschung (40) wenigstens einer Grundfarbe (12, 13) im reflektierten Streifenmuster (7) durch eine Absorption der Grundfarbe (12, 13) erfolgt.

6. Verfahren gemäß einem der vorangegangen Ansprüche, bei dem die Tiefenbestimmung der Oberfläche des Prüfobjektes aus einem ersten und zweiten Teilbereich (16, 18) des erfassten reflektierten Streifenmusters (7) ermittelt wird, wobei im ersten Teilbereich (16) die Tiefenbestimmung mittels der Abfolge der farbigen Streifen (4) und im zweiten Teilbereich (18) mittels der Abfolge von Breiten der Streifen (5) des reflektierten Streifenmusters (7) erfolgt.

7. Verfahren gemäß Anspruch 6, bei dem der zweite Teilbereich (18) durch einen Schwellwert bestimmt wird.

8. Verfahren gemäß Anspruch 7, bei dem ein Weißlicht auf die Oberfläche des Prüfobjektes projiziert wird und ein vom Prüfobjekt reflektiertes Abbild des Weißlichtes erfasst wird, wobei die Bestimmung des Schwellwertes mittels eines Vergleichs des reflektierten Abbildes des Weißlichtes und des reflektierten Streifenmusters (7) erfolgt.

9. Verfahren gemäß einem der vorangegangen Ansprüche, bei dem das reflektierte Streifenmuster (7) mittels einer Drei-Chip-Kamera erfasst wird.

10. Verfahren gemäß Anspruch 9, bei dem die Abfolge der Breiten der Streifen (5) des reflektierten Streifenmusters (7) aus einem Signal eines einzelnen Chips der Drei-Chip-Kamera gewonnen wird.

11. Verfahren gemäß einem der vorangegangen Ansprüche, bei dem das farbige Streifenmuster mittels eines Dias erzeugt wird.

12. Verfahren gemäß einem der vorangegangen Ansprüche, bei dem die Abfolge der farbigen Streifen (4) des farbigen Streifenmusters zufällig generiert wird.

13. Verfahren gemäß einem der vorangegangen Ansprüche, bei dem das Prüfobjekt von einer komplexen Flüssigkeit umgeben wird.

14. Verfahren gemäß Anspruch 13, bei dem als komplexe Flüssigkeit Blut (42) verwendet wird.

15. Vorrichtung zur Tiefenbestimmung einer Oberfläche eines Prüfobjektes, umfassend eine Projektionsvorrichtung, die zur Projektion eines farbigen Streifenmusters auf eine Oberfläche des Prüfobjektes ausgebildet ist, eine Erfassungsvorrichtung, die zur Erfassung eines von der Oberfläche des Prüfobjektes reflektierten Streifenmusters (7) vorgesehen ist, und eine Auswertvorrichtung, die zur Tiefenbestimmung der Oberfläche des Prüfobjektes mittels einer Abfolge von farbigen Streifen (4) des reflektierten Streifenmusters (7) und mittels einer Abfolge von Breiten der Streifen (5) des reflektierten Streifenmusters (7) ausgebildet ist.

## Claims

1. Method for depth determination of a surface of a test object, in which a colored fringe pattern which is formed from a sequence of colored fringes (4) is projected onto a surface of the test object, in which a fringe pattern (7) that is reflected by the surface of the test object is captured and evaluated using an evaluation apparatus, wherein the colored fringe pattern and the evaluation apparatus are configured such that the depth determination of the surface of the test object is performed using the sequence of colored fringes (4) of the reflected fringe pattern (7) and using a sequence of widths of the fringes (5) of the reflected fringe pattern (7).

2. Method according to Claim 1, in which a colored fringe pattern is used which is formed from the primary colors red (11), green (12) and blue (13), and/or the mixed colors (21, 22, 23, 31) thereof, and/or black (32).

3. Method according to Claim 2, in which the colored fringe pattern is formed such that if at least one primary color (12, 13) is extinguished (40), the sequence of the widths (5) of the fringes of the reflected fringe pattern (7) is obtained.

4. Method according to Claim 3, in which the sequence of the colored fringes (4) of the colored fringe pattern is derived from a previously known sequence of the widths of the fringes (5) of the reflected fringe pattern (7) such that, if at least one primary color (12, 13) is extinguished (40) from the colored fringe pattern, the previously known sequence of the widths (5) of the fringes is produced.

5. Method according to Claim 3 or 4, in which the extinction (40) of at least one primary color (12, 13) in the reflected fringe pattern (7) is effected by an absorption of the primary color (12, 13).

6. Method according to one of the preceding claims, in which the depth determination of the surface of the test object is ascertained from a first and second partial region (16, 18) of the captured reflected fringe pattern (7), wherein in the first partial region (16), the depth determination is effected by means of the sequence of the colored fringes (4), and in the second partial region (18) it is effected by means of the sequence of widths of the fringes (5) of the reflected fringe pattern (7).

7. Method according to Claim 6, in which the second partial region (18) is determined by a threshold value.

8. Method according to Claim 7, in which white light is projected onto the surface of the test object and an image of the white light reflected by the test object is captured, wherein the determination of the threshold value is effected using a comparison of the reflected image of the white light and the reflected fringe pattern (7).

9. Method according to one of the preceding claims, in which the reflected fringe pattern (7) is captured by way of a three-chip camera.

10. Method according to Claim 9, in which the sequence of the widths of the fringes (5) of the reflected fringe pattern (7) is obtained from a signal of a single chip of the three-chip camera.

11. Method according to one of the preceding claims, in which the colored fringe pattern is produced by way of a slide.

12. Method according to one of the preceding claims, in which the sequence of the colored fringes (4) of the colored fringe pattern is randomly generated.

13. Method according to one of the preceding claims, in which the test object is surrounded by a complex liquid.

14. Method according to Claim 13, in which blood (42) is used as the complex liquid.

15. Apparatus for determining the depth of a surface of a test object, comprising a projection apparatus which is designed for projecting a colored fringe pattern onto a surface of the test object, a capturing apparatus which is provided for capturing a fringe pattern (7) which is reflected by the surface of the test object, and an evaluation apparatus which is designed for the depth determination of the surface of the test object using a sequence of colored fringes (4) of the reflected fringe pattern (7) and using a sequence of widths of the fringes (5) of the reflected fringe pattern (7).

## Revendications

1. Procédé de détermination de la profondeur d'une surface d'un objet à contrôler, dans lequel on projette, sur une surface de l'objet à contrôler, un motif de bandes coloré, formé d'une succession de bandes (4) colorées, dans lequel on détecte un motif (7) de bandes réfléchi par la surface de l'objet à contrôler et on l'exploite au moyen d'un dispositif d'exploitation, dans lequel le motif de bandes coloré et le dispositif d'exploitation sont conformés de manière à effectuer la détermination de profondeur de la surface de l'objet à contrôler au moyen de la succession de bandes (4) colorées du motif (7) de bandes réfléchi et au moyen d'une succession de largeurs des bandes (5) du motif (7) de bandes réfléchi.

2. Procédé suivant la revendication 1, dans lequel on utilise un motif de bandes coloré, qui est formé des couleurs fondamentales rouge (11), verte (12) et bleue (13) et/ou de leurs couleurs (21, 22, 23, 31) mixtes et/ou du noir (32).

3. Procédé suivant la revendication 2, dans lequel on forme le motif de bandes coloré de manière à obtenir, à l'extinction (40) d'au moins une couleur (12, 13) fondamentale, la succession des largeurs (5) des bandes du motif (7) de bandes réfléchi.

4. Procédé suivant la revendication 3, dans lequel, à partir d'une succession connue à l'avance des largeurs des bandes (5) du motif (7) de bandes réfléchi, on déduit la succession des bandes (4) colorées du motif de bandes coloré, de manière à obtenir, à l'extinction (40) d'au moins une couleur (12, 13) fondamentale, à partir du motif de bandes coloré, la succession connue à l'avance des largeurs (5) des bandes.

5. Procédé suivant la revendication 3 ou 4, dans lequel l'extinction (40) d'au moins une couleur (12, 13) fondamentale dans le motif (7) de bandes réfléchi s'effectue par une absorption de la couleur (12, 13) fondamentale.

6. Procédé suivant l'une des revendications précédentes, dans lequel on détermine la détermination de profondeur de la surface de l'objet à contrôler à partir d'une première et d'une deuxième régions (16, 18) partielles du motif (7) de bandes réfléchi détecté, dans lequel, dans la première région (16) partielle, la détermination de profondeur s'effectue au moyen de la succession des bandes (4) colorées et dans la deuxième région (18) partielle, au moyen de la succession de largeurs des bandes (5) du motif (7) de bandes réfléchi.

7. Procédé suivant la revendication 6, dans lequel on détermine la deuxième région (18) partielle par une valeur de seuil.

8. Procédé suivant la revendication 7, dans lequel on projette une lumière blanche sur la surface de l'objet à contrôler et on détecte une image en lumière blanche réfléchie par l'objet à contrôler, la détermination de la valeur de seuil s'effectuant au moyen d'une comparaison de l'image réfléchie en lumière blanche et du motif (7) de bandes réfléchi.

9. Procédé suivant l'une des revendications précédentes, dans lequel on détecte le motif (7) de bandes réfléchi au moyen d'un appareil photographique à trois puces.

10. Procédé suivant la revendication 9, dans lequel on obtient la succession des largeurs des bandes (5) du motif (7) de bandes réfléchi à partir d'un signal d'une puce individuelle de l'appareil photographique à trois puces.

11. Procédé suivant l'une des revendications précédentes, dans lequel on produit le motif de bandes coloré au moyen d'une diapositive.

12. Procédé suivant l'une des revendications précédentes, dans lequel on génère, d'une manière aléatoire, la succession des bandes (4) colorées et du motif de bandes coloré.

13. Procédé suivant l'une des revendications précédentes, dans lequel on entoure l'objet à contrôler d'un liquide complexe.

14. Procédé suivant la revendication 13, dans lequel on utilise du sang (42) comme liquide complexe.

15. Dispositif de détermination de la profondeur d'une surface d'un objet à contrôler, comprenant un dispositif de projection constitué pour projeter un motif de bandes coloré sur une surface de l'objet à contrôler, un dispositif de détection prévu pour détecter un motif (7) de bandes réfléchi par la surface de l'objet à contrôler et un dispositif d'exploitation constitué pour la détermination de la profondeur de la surface de l'objet à contrôler au moyen d'une succession de bandes (4) colorées du motif (7) de bandes réfléchi et au moyen d'une succession de largeurs de bandes (5) du motif (7) de bandes réfléchi.
